# DEMANDE DE BREVET EUROPEEN

(11) **EP 2 199 322 A1**
(43) Date de publication de la demande: **23.06.2010**
(21) Numéro de dépôt: 09177932.2
(22) Date de dépôt: 03.12.2009
(51) Int. Cl.: C08J 7/04, C08J 7/18, F21V 7/22

(54) **Elément métallisé de projecteur ou feu automobile**

(30) Priorité: 19.12.2008 FR 0807303
(71) Demandeur: VALEO VISION, 93012 Bobigny (FR)
(72) Inventeur: Brassier, Marc, 94170, LE PERREUX (FR); Lara, Alberto, 23650, TORREDONJ (ES); Teba, Daniel, 23600, MARTOS (ES); Trigo, Juan Miguel, 23650, TORREDONJ (ES)

(57) **Abrégé**

L'invention concerne un élément (M) métallisé de véhicule automobile, qui comporte :
- une face de support (22) ;
- une couche métallique (24) qui recouvre au moins partiellement la face de support (22) ;
- un revêtement (28, 30) pour protéger la face de support (22) et la couche métallique (24).

Ledit revêtement comporte :
- une couche extérieure de protection (28) qui recouvre la couche métallique (24) et qui présente une dureté supérieure à celle de la couche métallique (24) ; et
- une couche intérieure de protection (30) qui est interposée entre la couche métallique (24) et la face de support (22) et qui présente une dureté supérieure à celle de la face de support (22).

## Description

L'invention se rapporte à un élément métallisé de véhicule automobile. Elle s'intéresse plus particulièrement aux pièces dites masques ou encore enjoliveurs, qui remplissent essentiellement une fonction esthétique dans le feu ou le projecteur d'un véhicule, ou encore aux pièces ayant une fonction mécanique dans ce type de produit, notamment des socles ou platines sur lesquels peuvent être montées d'autres pièces, comme des pièces optiques et/ou des éléments de connexion électrique ou mécanique, ou qui, sous forme d'élément monobloc, peuvent jouer dans les feux de signalisation, à la fois le rôle de réflecteur et de masque.

Elle peut aussi s'appliquer à des pièces métallisées ayant un rôle optique dans l'obtention de faisceaux lumineux, notamment des réflecteurs.

L'invention se rapporte plus particulièrement à un élément métallisé de projecteur ou feu automobile, qui comporte :
- une face de support ; le support étant à base de polymère
- une couche métallique qui recouvre au moins partiellement - notamment substantiellement- (extérieurement) la face de support ;
- un revêtement, notamment résistant aux rayures et à l'abrasion, pour protéger la face de support et la couche métallique.

Les masques, platines, socles ou réflecteurs sont des éléments importants dans un dispositif d'éclairage et/ou de signalisation de véhicule automobile.

Le réflecteur a ainsi pour fonction de réfléchir la lumière émise par une ou des sources lumineuses de façon que le faisceau lumineux émis par le dispositif d'éclairage et/ou de signalisation respecte une photométrie précise. Le masque doit pouvoir donner un aspect esthétique, brillant ou satiné par exemple, qui soit bien homogène et durable dans le temps, tout comme les socles et platines, tout particulièrement quand ils sont visibles de l'extérieur du projecteur ou du feu.

A cet effet, la surface réfléchissante de l'élément métallisé, quand il s'agit particulièrement d'un réflecteur, doit être aussi peu absorbante que possible dans le spectre lumineux visible pour que le rendement lumineux du réflecteur soit le meilleur possible.

De plus, le réflecteur (ou le masque) doit pouvoir réfléchir la lumière de manière achromatique, c'est-à-dire sans effet d'irisation ou de coloration. En effet, la couleur du faisceau lumineux émis est aussi une contrainte photométrique, aussi bien réglementaire qu'esthétique.

En outre, la rugosité de la surface réfléchissante est conçue de manière que les rayons lumineux soient réfléchis de manière maîtrisée.

Par ailleurs, il existe principalement deux types de pièces métallisées :
- D'une part, celles qui sont métalliques, qui résistent bien aux contraintes thermiques et mécaniques, mais qui sont souvent assez lourds et qui ne peuvent, du fait de leur mode de fabrication, que difficilement permettre l'obtention de formes complexes ou l'intégration d'éléments annexes du type moyens de fixation de la lampe.
- D'autre part, celles à base de polymère(s), thermodurcissables ou thermoplastiques, qui présentent par contre l'avantage de la légèreté et de la liberté dans les formes obtenue, car fabriquées par des techniques de moulage du type injection.

Après moulage, ce dernier type de pièce est rendu réfléchissant par dépôt d'une couche métallique réfléchissante du type aluminium sur une de ses faces, qui sera appelée "face de support" dans la suite de la description et dans les revendications.

On connaît par le document EP 0 490 028 l'utilisation d'une couche '*base coat*' sous la couche de dépôt métallique, visant à améliorer la résistance à la corrosion, à la chaleur humide ou au vieillissement climatique.

Le document GB 2 360 775 décrit une métallisation sous vide avec la problématique de garantir une surface lisse de la pièce.

Le document US 2003/0104185 décrit un dépôt multicouche sur un plastique transparent.

Le document US 4 855 186 décrit un revêtement multicouche pour barrière thermique sur un plastique transparent (vitrage).

Le document US 2007/0202344 décrit un revêtement multicouche sur polymère avec une première couche à base siloxane.

L'invention concerne plus particulièrement les éléments métallisés à base de polymère(s).

Dans la suite de la description et dans les revendications, on comprendra que le terme application d'une couche ou dépôt d'une couche implique que ladite couche adhère à la surface sur laquelle elle est déposée.

L'élément métallisé, et plus particulièrement sa face de support métallisée, est normalement un élément qui n'est pas soumis à des frottements lors de son utilisation. Le réflecteur est en effet à l'abri à l'intérieur d'un boîtier étanche protégé par une glace très résistante et aucune pièce n'est susceptible de venir frotter contre sa face métallisée.

Cependant, l'élément métallisé est susceptible de subir de faibles frottements ou abrasions durant son transport et sa manipulation entre le moment du dépôt de la couche métallique et la fin du montage dans le dispositif d'éclairage (projecteur) ou de signalisation (feu).

La couche métallique et la face de support sont alors susceptibles d'être rayées par une pression très faible, par exemple lorsqu'elle est touchée par un doigt. De telles rayures détériorent l'état de surface de l'élément métallisé, en créant ainsi des zones non homogènes dans le faisceau lumineux émis quand il s'agit d'un réflecteur, ou au moins des défauts d'aspect quand il s'agit d'un élément à vocation esthétique et/ou mécanique.

On distinguera par la suite deux types de rayure.

Une rayure superficielle est réalisée par l'endommagement de la seule couche métallique sans que la face de support ne soit entamée. La rayure superficielle est provoquée par frottement entre la face extérieure de la couche métallique et un élément plus dur et plus résistant que la couche métallique.

Une rayure profonde est réalisée par enfoncement plastique ou élastique de la face de support au cours duquel la couche métallique est susceptible d'être déchirée ou tout au moins déformée. Ce type de rayure est provoqué par le fait que la face de support constitue une fondation trop tendre, c'est-à-dire trop souple et/ou trop ductile pour empêcher la déformation de la couche métallique.

Pour éviter ces rayures profondes et superficielles, il est connu de revêtir la couche métallisée d'un revêtement de protection contre les rayures et l'abrasion obtenu par voie dite "humide", c'est-à-dire par application d'un matériau sous forme liquide ou visqueuse. C'est par exemple le cas de l'application d'une couche de vernis transparent qui présente une dureté et une résistance à la rupture suffisantes pour empêcher que la couche métallique ne soit rayée par abrasion et/ou par enfoncement du matériau polymère constituant le réflecteur.

De manière connue, cette couche de protection est relativement épaisse de manière à présenter une dureté et une résistance à la rupture suffisantes pour empêcher les rayures profondes et superficielles du réflecteur susceptibles d'être provoquées par les frottements de faible intensité comme évoqué précédemment.

On comprendra que la couche de protection est apte à protéger l'élément métallisé de rayures pouvant être formées par des sollicitations relativement faibles telles que le contact de la face réfléchissante du réflecteur avec les doigts d'un opérateur. On comprendra ainsi que le revêtement de protection n'offre pas un blindage efficace contre les chocs, par exemple provoqués par des jets de gravier, ni contre le frottement avec des objets particulièrement durs tels que des outils métalliques pointus.

La couche de vernis est très épaisse, par exemple supérieure à 10 microns. Une telle épaisseur se traduit par une baisse du rendement lumineux du projecteur par absorption d'une partie de la lumière lors de son passage à travers la couche de vernis, quand l'élément métallisé est un réflecteur.

En outre, l'opération de vernissage est onéreuse du fait de l'épaisseur relativement importante de vernis nécessaire pour revêtir la couche métallique.

De plus, la réalisation de couches de matériau par voie humide et notamment par application d'un vernis est longue car elle nécessite une étape de dépôt du vernis, puis une étape de séchage et/ou réticulation du vernis durant laquelle le réflecteur ne peut pas être manipulé.

La présente invention a pour objet un élément métallisé du typé décrit précédemment, **caractérisé en ce que** le revêtement résistant comporte :
- une couche extérieure de protection qui recouvre extérieurement la couche métallique et qui présente une dureté supérieure à celle de la couche métallique ; et
- une couche intérieure de protection qui est interposée entre la couche métallique et la face de support et qui présente une dureté supérieure à celle de la face de support.

On peut quantifier la dureté d'une couche par la méthode décrite dans la norme ISO 15 184.

De préférence, la couche intérieure de protection et/ou la couche extérieure de protection ont une dureté d'au moins un niveau HB, qui peut par exemple aller du niveau HB au niveau 2H à 3H.

La face de support est généralement peu dure, par exemple de niveau 5B à 6B, et la couche métallique a un niveau de dureté comparable, également de niveau 5 à 6B généralement.

La couche extérieure a de préférence une épaisseur d'au moins 20 nm, notamment d'au moins 25 nm. Il est préférable qu'elle ait une épaisseur d'au plus 50nm. L'épaisseur de la couche peut ainsi être comprise entre 20 et 50 nm, notamment entre 25 et 35 nm.

La couche intérieure peut, à dureté comparable à celle de la couche extérieure notamment, être plus épaisse, puisqu'il n'y a pas besoin de sauvegarder sa transparence. Elle a ainsi de préférence une épaisseur d'au moins 50nm ; et notamment une épaisseur comprise entre 50 ou 60 nm et 100 nm.

Selon d'autres caractéristiques de l'invention :
- la couche extérieure de protection présente une épaisseur inférieure ou égale à 60 nm ;
- la couche extérieure de protection présente une épaisseur supérieure ou égale à 20 nm ;
- la dureté de la couche intérieure de protection est au moins égale à celle de la couche extérieure de protection ;
- la face de support est réalisée en un matériau plastique ;
- la superposition de la couche extérieure de protection et de la couche intérieure de protection présente une rigidité et une résistance à la rupture suffisante pour protéger la face de support des rayures ;
- la couche intérieure de protection est plus épaisse que la couche extérieure de protection ;
- la couche intérieure de protection présente une épaisseur comprise entre 30 et 100 nm ;
- la couche intérieure de protection n'est pas transparente ;
- la couche métallique présente une épaisseur comprise entre 30 et 120 nm ;
- une couche d'un matériau souple formant un joint de dilatation est interposée entre la couche intérieure de protection et la face de support ;
- une couche anticorrosion en un matériau transparent recouvre extérieurement la couche métallique ;
- la couche anticorrosion est interposée entre la couche métallique et la couche extérieure de protection ;
- la couche anticorrosion recouvre extérieurement la couche extérieure de protection ;
- la couche anticorrosion présente une épaisseur comprise entre 5 et 50 nm ;
- les couches intérieure et extérieure de protection sont chacune réalisées en un matériau essentiellement minéral ;
- les couches intérieure et extérieure de protection sont réalisées en un matériau à base de polysiloxane ;
- l'élément est un réflecteur pour un dispositif d'éclairage et/ou de signalisation de véhicule automobile.

Selon une variante, la couche intérieure de protection joue aussi le rôle d'une couche barrière à l'oxygène et/ou aux volatiles oligomères. Pour remplir ce double rôle, on préfère la choisir parmi les nitrures ou oxynitrures de silicium. On évite/limite ainsi la thermo-oxydation du support en polymère, les couches à base de nitrure étant particulièrement efficaces dans ce rôle.

L'invention concerne aussi un procédé de réalisation de l'élément métallisé selon les enseignements de l'invention, **caractérisé en ce que** les couches intérieure et extérieure de protection sont réalisées par dépôt chimique en phase vapeur assisté par plasma à partir de gaz précurseurs.

Selon d'autres caractéristiques du procédé :
- les gaz précurseurs comportent de l'oxygène et un monomère organosilicone ou hydrocarbure ;
- le monomère organosilicone comprend / est formé par du polysiloxane ;
- le joint de dilatation est réalisé par dépôt chimique en phase vapeur assisté par plasma à partir d'un gaz précurseur comportant le même monomère que les couches de protection de manière que le joint de dilatation soit réalisé en un matériau essentiellement organique ;
- lors du dépôt successif du joint de dilatation et de la couche intérieure de protection, le taux d'oxygène dans les gaz précurseurs est augmenté progressivement par rapport à la croissance du joint de dilatation ;
- la couche anticorrosion est réalisée par dépôt chimique en phase vapeur assisté par plasma à partir d'un gaz précurseur pouvant comporter le même monomère que les couches de protection de manière que la couche anticorrosion soit réalisée en un matériau essentiellement organique ;
- lors du dépôt successif de la couche anticorrosion et de la couche extérieure de protection ou inversement, le taux d'oxygène dans les gaz précurseurs est augmenté progressivement ; ceci de façon à ce que, dans la couche déposée, il y ait une évolution de concentration en oxygène dans l'épaisseur déposée. On peut ainsi n'avoir plus de frontière entre les deux couches, mais une unique couche dont le taux en oxygène varie progressivement (gradient) ou pas. Cette modulation dans le taux d'oxygène (ou d'azote ou de carbone sur le même principe), qu'on retrouve dans l'épaisseur des couches, peut s'appliquer à chacune des couches déposées par ce type de technique de dépôt selon l'invention, de part et d'autre de la couche métallique.
   Selon l'invention, avantageusement donc, l'une au moins des couches (à part la couche entièrement métallique) est déposée sous vide, avec un taux variable dans son épaisseur en oxygène, carbone et/ou azote
- lors du dépôt des différentes couches, l'élément demeure dans une même enceinte d'une même installation de dépôt de couche par voie sèche.

D'autres caractéristiques et avantages de l'invention apparaîtront au cours de la lecture de la description détaillée qui va suivre pour la compréhension de laquelle on se reportera aux dessins annexés, parmi lesquels :
- les figures 1a, 1b, 1c et 1d sont des vues de face de portions de projecteurs de véhicules automobiles représentant des masques métallisés traités selon l'invention ;
- la figure 2 est une vue latérale d'un feu arrière intégrant une platine métallisée traitée selon l'invention ;
- la figure 3 est une vue schématique qui représente l'empilement des couches superficielles recouvrant la face réfléchissante du réflecteur ;
- la figure 4 est une vue similaire à celle de la figure 3, qui représente une variante dans l'empilement des couches superficielles ;
- la figure 5 est une vue similaire à celle de la figure 3, qui représente une variante dans l'empilement des couches superficielles ;
- la figure 6 est une vue schématique de côté qui représente une installation de dépôt chimique sous vide en phase vapeur pour réaliser le réflecteur réalisé selon les enseignements de l'invention ;
- la figure 7 est une vue de dessus de l'installation de la figure 6 ;
- la figure 8 est une vue schématique d'une autre installation de dépôt sous vide.

Dans la suite de la description, des éléments présentant des fonctions similaires, analogues ou identiques seront désignés par des mêmes numéros de référence.

Dans la suite de la description, on adoptera à titre non limitatif une orientation verticale dirigée depuis l'intérieur, à proximité de la face de support 22, vers l'extérieur en s'éloignant orthogonalement de la face de support 22.

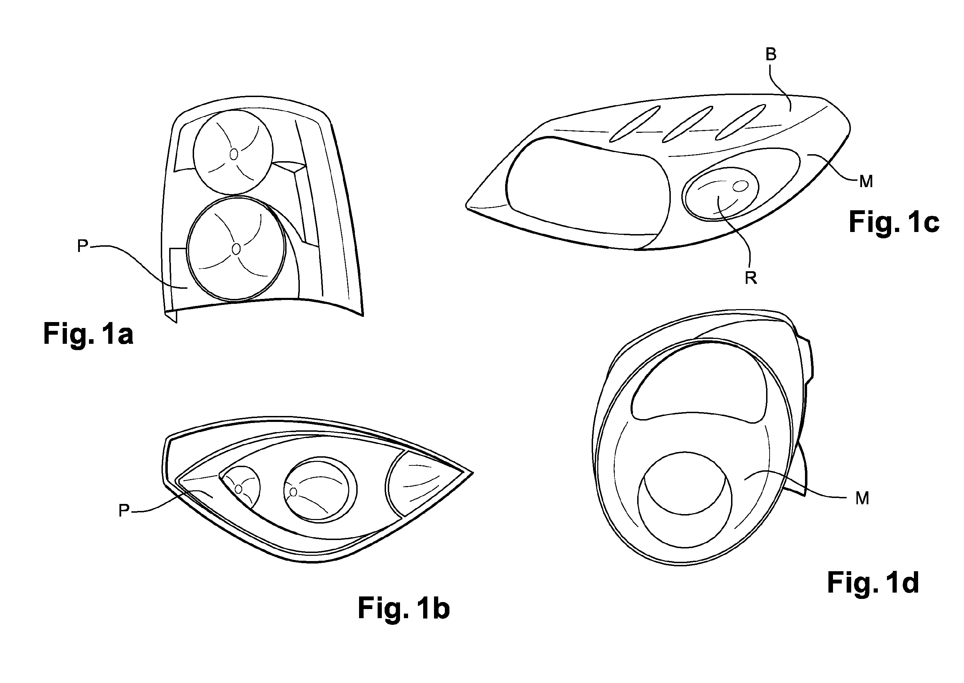

On a représenté aux figures 1a, 1b, 1c et 1d des exemples de réalisation de pièces métallisées pouvant être traitées selon la présente invention : ce sont des masques M (figures 1c et 1d), déjà intégrés dans des boîtiers B de projecteurs automobiles, éventuellement associés à des réflecteurs R, et des platines P (figures 1a et 1b) de feu de signalisation, qui sont des pièces monobloc métallisées servant à la fois, ici, de réflecteur dans la zone associée à la source de lumière (non représentée), et de masque.

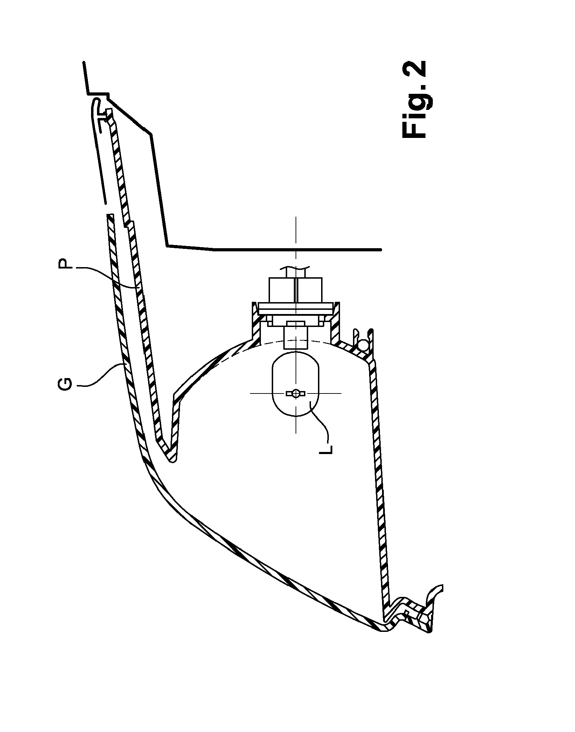

La figure 2 illustre une autre variante de platine de feu monobloc, sous forme d'élément métallisé qu'on peut traiter selon l'invention : il s'agit, en coupe latérale, d'une section de feu arrière de véhicule, qui représente une glace extérieure G, une lampe L, et une platine P faisant office de masque et de réflecteur.

Par la suite, on indique que le traitement selon l'invention s'applique à un masque M. Il va de soi que le traitement peut s'appliquer de la même façon à une platine P ou à un réflecteur.

Le masque M est réalisé par moulage, par exemple par injection, en un matériau plastique.

Il est plus particulièrement réalisé en un plastique thermodurcissable, par exemple en polycarbonate (PC), en copolymère acrylonitrile-butadiène-styrène (ABS), en polytéréphtalate de butylène (PBT), en PET (polytéréphtalate d'éthylène) ou encore en polyamide (PA). Le masque M peut aussi être réalisé en un thermoplastique, par exemple en polyesters insaturés (UP-BMC) ou en polyépoxydes (EP). Dans les exemples de matériaux cités dans ce paragraphe, le code ISO 1043 du matériau a été précisé entre parenthèses.

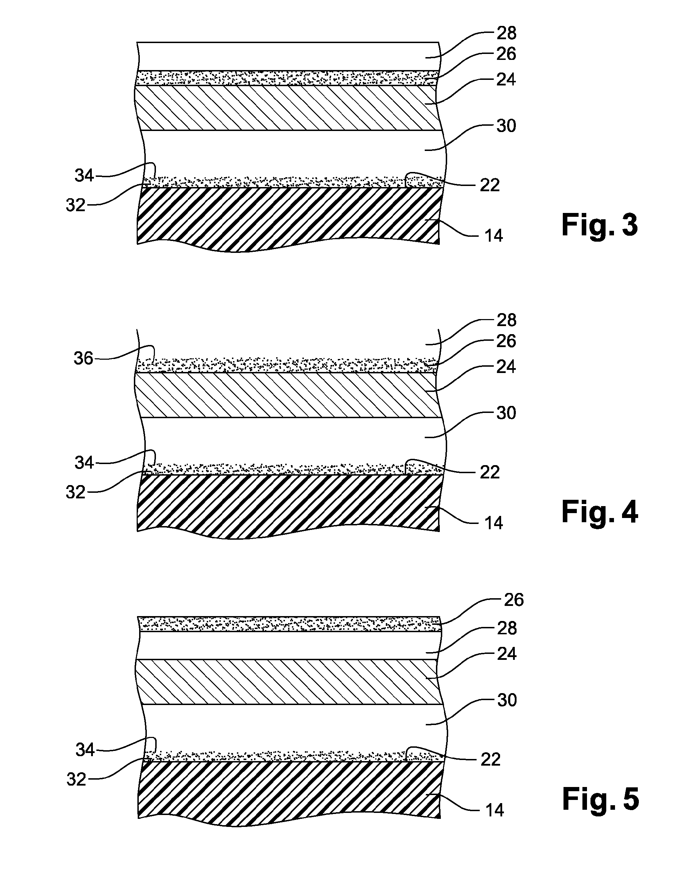

Comme représenté en coupe aux figures 3 à 5, la face de support 22 du masque M réalisé en un tel matériau est généralement tendre, c'est-à-dire qu'elle est susceptible d'être déformée par enfoncement locale par des sollicitations de faible intensité, telle que l'appui d'un doigt humain, provoquant ainsi une rayure profonde.

La couche métallique 24 est réalisée en un matériau métallique susceptible de produire une réflexion spéculaire tel que de l'aluminium (AI) ou un alliage d'aluminium, ou tout autre matériau métallique adapté.

La couche métallique 24 est réalisée par un procédé connu de métallisation sous vide de type évaporation, aussi connu sous l'acronyme anglosaxon "PVD" pour "physical vapor deposition". Un tel procédé permet de réaliser une couche métallique 24 très mince qui présente une épaisseur comprise entre 50 et 100 nm (nanomètres).

Ce procédé permet ainsi d'économiser du matériau métallique par rapport à une couche plus épaisse tout en assurant une répartition homogène et un état de surface maîtrisé sur toute la face de support 22.

La fine couche métallique 24 est très tendre, c'est-à-dire peu dure, et elle présente ainsi une très grande sensibilité aux rayures. Ainsi, la moindre pression d'un doigt humain est susceptible d'endommager la couche métallique par une rayure superficielle.

Il est aussi connu de revêtir extérieurement la couche métallique 24 d'une très fine couche anticorrosion 26 en un matériau tel qu'un verre organique sur une épaisseur de 2 à 5 nm. Cette couche anticorrosion 26 remplit une fonction de barrière chimique sans induire de modification notable de la transmission de la lumière.

Cette couche anticorrosion 26 est donc réalisée en un matériau transparent et présente une épaisseur suffisamment fine pour ne sensiblement pas absorber de lumière dans le spectre visible.

La couche anticorrosion 26 est réalisée par un procédé connu de dépôt de couche mince par voie dite "sèche", c'est-à-dire que le matériau constitutif de la couche est déposé sous forme gazeuse. De tels procédés permettent d'obtenir des couches de la minceur requise et présentant des propriétés physiques plus intéressantes que les procédés de dépôt de couche par voie humide. Un tel procédé de déposition sera décrit plus en détail par la suite.

La couche anticorrosion 26 est réalisée en un matériau sensiblement aussi tendre, voire plus tendre, que la couche métallique 24. La couche anticorrosion 26 est donc susceptible d'être elle-même rayée par les mêmes causes que la couche métallique 24. La couche anticorrosion 26 ne fourni donc pas une protection efficace contre les rayures de la couche métallique 24.

Pour protéger la couche métallique et la face de support des rayures et de l'abrasion, il est connu d'agencer un revêtement résistant aux rayures et à l'abrasion.

On a constaté que, de manière surprenante et à l'encontre des pratiques courantes, le fait de réaliser le revêtement de protection contre les rayures et l'abrasion en une première couche extérieure de protection 28 et une deuxième couche intérieure de protection 30 qui prennent en sandwich la couche métallique 24 permettaient d'obtenir une protection contre les rayures équivalente à celle obtenue par une couche de vernis, tout en améliorant sensiblement le rendement lumineux du réflecteur.

La première couche extérieure de protection 28 qui recouvre extérieurement la couche métallique 24. Cette première couche extérieure de protection 28 présente une dureté supérieure à celle de la couche métallique 24 de manière à empêcher que la couche métallique 24 ne soit endommagée par des rayures superficielles.

La couche extérieure de protection 28 est destinée à être traversée par les rayons lumineux réfléchis par le projecteur. A cet effet, la couche extérieure de protection 28 présente un aspect transparent aux rayons lumineux dans tout le spectre visible.

Or, la transmission de la lumière diminue de manière inversement proportionnelle à l'épaisseur de la couche extérieure de protection 28. Pour permettre une bonne transmission de la lumière et ainsi assurer un bon rendement optique du réflecteur 14, l'épaisseur de la couche extérieure de protection 28 est la plus faible possible, par exemple comprise entre 20 et 50 nm de manière à permettre une bonne transmission de la lumière tout en assurant une fonction de protection de la couche métallique 24 contre les rayures superficielles.

La couche extérieure de protection 28 est ainsi suffisamment fine pour transmettre la lumière sensiblement sur tout le spectre visible et de manière sensiblement achromatique.

Pour présenter une telle finesse, la couche extérieure de protection 28 est obtenue par un procédé connu de dépôt de couche mince par voie dite "sèche", de manière similaire à la couche anticorrosion 26.

La couche extérieure de protection 28 est par exemple constituée d'un matériau polysiloxane majoritairement ou en totalité inorganique, du type quasi-silice (SiₓC_{y}O_{z}) ou "quartz", le ratio les ratios y /x variant de 3 à 0 et z/x variant de 0.5 à 2.

Cette couche extérieure de protection 28 ne présente cependant pas des caractéristiques de rigidité et/ou de résistance à la rupture suffisantes pour empêcher l'enfoncement de la face de support 22 en cas de pression locale trop importante. Des rayures profondes sont ainsi susceptibles d'endommager la couche métallique 24 et la face de support 22 malgré la protection contre les rayures superficielles.

Une deuxième couche intérieure de protection 30 est donc interposée entre la couche métallique 24 et la face de support 22. Cette deuxième couche intérieure de protection 30 présente une dureté et une résistance à la rupture telles que la superposition de la couche extérieure de protection 28 et de la couche intérieure de protection 30 présente une rigidité et/ou une résistance à la rupture suffisante pour empêcher l'enfoncement de la face de support 22. Ainsi le masque M est protégé des rayures profondes.

Cette couche intérieure de protection 30 est masquée par la couche métallique 24 et elle ne remplit ainsi aucune fonction optique.

Ainsi, cette couche intérieure de protection 30 n'est pas limitée en épaisseur par des contraintes optiques. La couche intérieure de protection 30 est ici plus épaisse que la couche extérieure de protection 28 de manière à présenter des caractéristiques de dureté, de rigidité et de résistance à la rupture suffisantes pour empêcher les rayures profondes dans la face de support 22. Cette couche intérieure de protection 30 forme ainsi une fondation suffisamment dure et résistante pour porter la couche métallique 24 et la couche extérieure de protection 28 et leur permettre de résister aux sollicitations susceptibles de créer des rayures profondes.

L'épaisseur de cette couche intérieure de protection 30 est par exemple comprise entre 50 et 100 nm.

Une couche intérieure de protection 30 présentant une telle finesse et de telles caractéristiques de rigidité et de résistance est avantageusement obtenue par un procédé connu de dépôt de couche mince par voie dite "sèche", de manière similaire à la couche anticorrosion 26.

En variante non représentée de l'invention, la couche intérieure de protection est réalisée par voie humide, par exemple par dépôt d'une couche de vernis.

Par ailleurs, il n'est pas non plus nécessaire que cette couche intérieure de protection 30 soit réalisée en un matériau parfaitement transparent. La couche intérieure de protection 30 peut ainsi présenter un aspect coloré, translucide ou opaque.

Le matériau constituant la couche intérieure de protection 30 est par exemple réalisé en matériau polysiloxane majoritairement ou en totalité inorganique, du type quasi-silice (SiₓC_{y}O_{z}).qui peut être modifié par exemple en ajoutant un gaz réactif ou un mélange de gaz réactifs tels de l'ammoniac (NH₃) ou de l'azote (N₂) pour réaliser une couche dure d'oxy-nitrure de silicium, présentant également un effet barrière à l'oxygène de manière à éviter la thermo-oxydation du substrat et de limiter la diffusion de volatiles issus de ce même substrat, ou toute autre solution connue de l'homme du métier pour augmenter sa rigidité et sa résistance. Ces solutions sont susceptibles de colorer la couche intérieure de protection 30 sans conséquence pour la réflexion de la lumière. Le matériau constituant la couche intérieure de protection 30 comporte par exemple du nitrure.

La couche intérieure de protection 30 présente un coefficient de dilatation à la chaleur différent de celui de la face de support 22, par exemple au moins de 40.10⁻⁶/K. Or, les masques M sont susceptibles d'être soumis à de fortes contraintes thermiques du fait de la présence des sources lumineuses 12 à leur proximité. Ces contraintes thermiques sont susceptibles de provoquer une dilatation différente de la face de support 22 du réflecteur 14 et de la couche intérieure de protection 30. Or, la couche intérieure de protection 30 n'est pas suffisamment souple pour absorber les contraintes provoquées par cette dilatation différentielle, ce qui aboutirait ainsi à un décollement de la couche intérieure de protection 30, et donc de la couche métallique 24.

Pour éviter ce problème, une couche formant joint de dilatation 32 est interposée entre la couche intérieure de protection 30 et la face de support 22. Ce joint de dilatation 32 présente une élasticité suffisante pour permettre une dilatation différentielle de la face de support 22 par rapport à la couche intérieure de protection 30 tout en conservant une adhérence de la couche intérieure de protection 30 sur la face de support 22.

Le joint de dilatation 32 est par exemple réalisé en un matériau polysiloxane majoritairement ou en totalité organique .

Dans le mode de réalisation représenté aux figures 3 à 5, le joint de dilatation 32 et la couche intérieure de protection 30 ne sont pas délimités nettement. Le joint de dilatation 32 est obtenu en diminuant la proportion de verre organique et en augmentant la proportion de verre minéral, le joint de dilatation 32 étant séparé de la couche intérieure de protection 30 par l'intermédiaire d'une zone de transition 34 dans laquelle la proportion de matériau organique diminue progressivement selon un gradient en remontant vers l'extérieur à travers l'épaisseur de la zone de transition 34.

Le joint de dilatation 32 présente une épaisseur suffisante pour assurer la fonction d'élasticité, par exemple entre 5 nm en prenant en intégrant l'épaisseur de la zone de transition 34.

Un tel agencement est par exemple obtenu par un procédé connu de dépôt de couche mince par voie "sèche" qui sera décrit plus en détail par la suite.

Selon une variante non représentée de l'invention et par analogie avec la figure 2, le joint de dilatation 32 est délimité nettement par rapport à la couche intérieure de protection 30. La couche de matériau élastique présente alors avantageusement une épaisseur très faible juste suffisante pour procurer l'effet de joint de dilatation, par exemple de l'ordre de 2 à 5 nm, dans un souci d'économie de matériau. Une telle épaisseur peut être obtenue en déposant le joint de dilatation par un procédé de dépôt de couche mince par voie sèche.

La couche anticorrosion 26 qui recouvre la couche métallique 24 est avantageusement interposée entre la couche métallique 24 et la couche extérieure de protection 28. En effet, la couche anticorrosion 26 est réalisée en un matériau plus tendre que celui constituant la couche extérieure de protection 28. Cet agencement permet ainsi à la couche extérieure de protection 28 de protéger des rayures superficielles à la fois la couche anticorrosion 26 et la couche métallique 24.

Selon une variante de l'invention représentée à la figure 3, la couche anticorrosion 26 et la couche extérieure de protection 28 ne sont pas délimitées de manière nette, mais par une zone de transition 36. La zone de transition 36 entre la couche anticorrosion 26 et la couche extérieure de protection 28 est obtenu par un matériau comportant un mélange polysiloxane majoritairement organique, et de polysiloxane majoritairement ou en totalité inorganique, du type quasi-silice, la proportion de polymére organique diminuant selon un gradient déterminé en s'approchant de la couche extérieure de protection 28 à travers l'épaisseur de la zone de transition 36. La zone de transition 36 présente par exemple une épaisseur de 2 à 5 nm.

Selon une variante de l'invention représentée à la figure 4, la couche anticorrosion 26 recouvre extérieurement la couche extérieure de protection 28.

Pour obtenir des couches de protection 28, 30 d'une telle finesse tout en présentant des caractéristiques mécaniques suffisantes pour remplir leur fonction de protection contre l'abrasion et les rayures, elles sont réalisées par un procédé de dépôt par vapeur chimique sous vide. Il s'agit ici plus particulièrement d'un procédé de dépôt par vapeur chimique sous vide assisté par plasma.

Le dépôt chimique en phase vapeur assisté par plasma, aussi connu sous l'acronyme anglosaxon "PECVD" pour "Plasma Enhanced Chemical Vapor Deposition", est une technique de dépôt par voie sèche, c'est-à-dire à partir d'une phase gazeuse. Elle utilise des gaz précurseurs qui sont injectés dans une enceinte et le dépôt résulte de la décomposition de ces gaz par une réaction chimique.

Dans le procédé PECVD, la réaction chimique est assistée par une décharge électrique en courant continu ou à moyenne ou haute fréquence, par exemple radiofréquence ou micro-ondes, qui ionise les gaz et forme un plasma, c'est-à-dire un mélange globalement neutre électriquement constitué d'ions et d'électrons. Le plasma favorise la dissociation des gaz et active la réaction chimique en phase vapeur.

Les couches extérieure 28 et intérieure 30 de protection, le joint de dilatation 32 et la couche anticorrosion 26 sont avantageusement réalisés par polymérisation d'un même monomère organosilicone du type polysiloxane tel que l'hexaméthyldisiloxane (HMDSO), le tétraméthyldisiloxane (TMDSO), le tétraethoxysilane (TEOS) ou encore le tétraméthylsilane (TMS).

En variante, le polysiloxane peut être remplacé ou mélangé avec un monomère du type hydrocarbure tel que de l'acétylène (C₂H₂) ou de l'éthylène (C₂H₄).

Tout autre composé chimique connu de l'homme du métier pour produire des couches de protection 28, 30 présentant les caractéristiques optiques et mécaniques requises peut, bien entendu, être utilisé.

Sans adjonction d'oxygène sous forme de gaz précurseur, le polysiloxane permet de faire croître une couche de matériau formant un polysiloxane purement organique.

L'adjonction d'oxygène sous forme de gaz précurseur permet d'obtenir une couche de dépôt à composante minérale du type silice (SiₓO_{y}), dont la proportion dépend du taux d'oxygène réagissant avec le polysiloxane. Lorsque le taux d'oxygène est suffisant, la réaction du polysiloxane et de l'oxygène permet d'obtenir un matériau purement inorganique.

En variante, la réalisation de la couche intérieure de protection 30 peut être réalisée avec des additifs chimiques sous forme de gaz précurseurs. La nature des additifs chimiques et leur taux sont choisis de manière à obtenir la rigidité et la résistance voulues pour la couche intérieure de protection 30, sans contraintes optiques. Par exemple un tel additif chimique est formé par de l'azote de manière à obtenir une couche d'oxynitrure (SiₓN_{y}O_{z}).

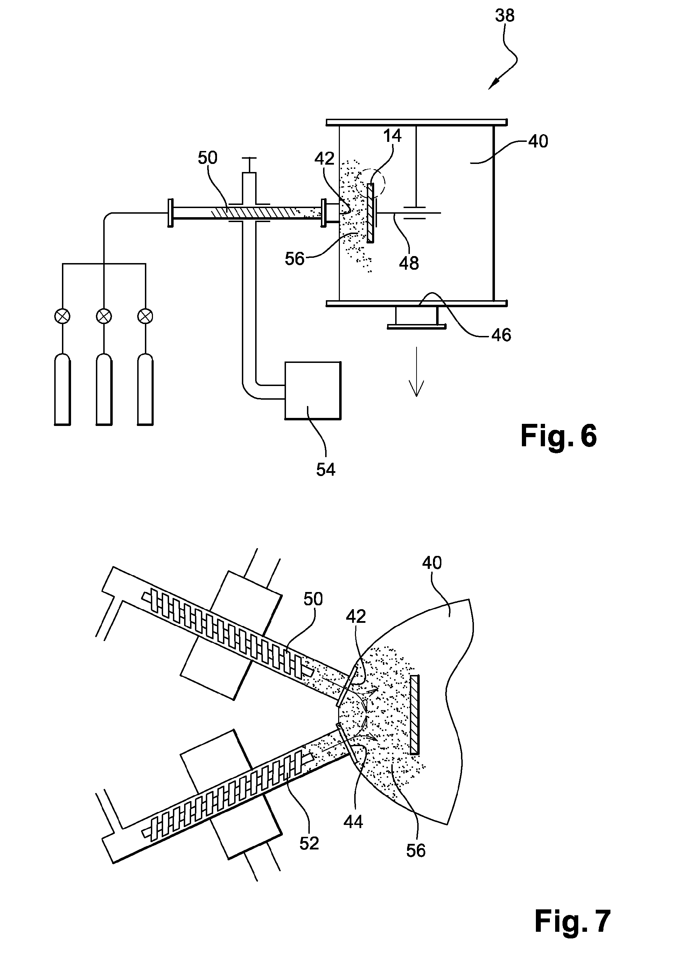

Le procédé PECVD est mis en oeuvre par une installation 38 du type de celle représentée aux figures 6 et 7.

Une telle installation 38 comporte une enceinte étanche 40 qui comporte au moins un orifice d'entrée, ici deux orifices d'entrée 42, 44, et au moins un orifice de sortie 46. Les orifices d'entrée 42, 44 sont agencés à proximité l'un de l'autre.

L'enceinte 40 est munie d'un organe de réception 48 du réflecteur 14 dont la face de support 22 est brute et prête à être revêtu des différentes couches. Le réflecteur 14 est agencé de manière que sa face de support 22 soit agencée en vis-à-vis des orifices d'entrée 42, 44.

Chaque orifice d'entrée 42, 44 est raccordé à une chambre de ionisation 50, 52 associée qui est formée par une conduite dans laquelle un gaz précurseur est injecté à travers l'applicateur (« chambre d'ionisation ») dans le cas représenté d'un plasma micro-onde. Le gaz passant dans la conduite est exposé à des décharges électriques émises par une antenne 54 adaptée. Les décharges électriques sont réalisées de manière que le gaz précurseur soit ionisé et transformé en un plasma 56 froid par la décharge électrique. Aux figures 5 et 6, le plasma 56 est symbolisé par des nuages de points.

La première chambre d'ionisation 50 est alimentée par un mélange de polysiloxane et d'argon. Le premier orifice d'entrée 42 permet ainsi l'introduction d'un plasma 56 de ce premier mélange gazeux. Dans l'exemple qui suit, le polysiloxane sélectionné sera de l'hexaméthyldisiloxane qui, pour simplifier la lecture, sera désigné par le terme "HMDSO", et le plasma 56 du mélange gazeux sera appelé plasma "HMDSO".

La deuxième chambre d'ionisation 52 est alimentée par de l'oxygène. Le deuxième orifice d'entrée 44 permet ainsi l'introduction d'un plasma d'oxygène 56.

La quantité d'oxygène introduite dans la deuxième chambre d'ionisation 52 est régulée en fonction de la composition souhaitée pour la couche à former sur la face de support 22, par exemple au moyen d'une vanne (non représentée).

L'orifice de sortie 46 de l'enceinte 40 permet l'évacuation par pompage des gaz en excès.

Avantageusement, toutes les couches recouvrant la face de support 22 sont réalisées successivement dans la même installation 38. Ainsi, la face de support 22 du réflecteur 14 est recouverte de toutes ses couches de manière rapide.

Lors d'une première étape "E1" de dépôt de joint, le joint de dilatation 32 est formé par injection de plasma "HMDSO" 56 de manière à former le joint de dilatation 32 d'une épaisseur comprise entre 2 et 5 nm. Le joint de dilatation ainsi obtenu est constitué en un matériau souple du type polymère organique avec un CTE au moins de 40.10⁻⁶/K

Puis, lors d'une deuxième étape "E2" de protection intérieure, l'injection de plasma "HMDSO" 56 se poursuit sans interruption après la première étape "E1" de dépôt du joint. Du plasma d'oxygène 56 est alors injecté simultanément avec le plasma "HMDSO" 56. Le taux d'oxygène est progressivement augmenté jusqu'à atteindre un débit entre 3 et 30 fois celui du HMDSO, de manière que la partie extérieure de la couche intérieure de protection 30 soit formée d'un matériau minéral à 100% du type silice. Le taux d'oxygène est régulé de manière que l'épaisseur de la zone de transition 36 entre le joint de dilatation 32 et la partie minérale soit comprise entre 2 et 5 nm. On obtient ainsi un gradient de rigidité dans l'épaisseur de la zone de transition 36.

Puis, lors d'une troisième étape "E3" de métallisation, la couche métallique 24 est formée dans l'installation 38 par un procédé connu de déposition d'aluminium ou d'alliage métallique par vapeur sous vide ou "PVD".

Durant cette troisième étape de métallisation "E3", l'injection de plasma "HMDSO" et d'oxygène 56 est interrompue.

Puis, lors d'une quatrième étape "E4" anticorrosion, la couche anticorrosion 26 est déposée en recouvrant la couche métallique 24. La couche anticorrosion 26 n'est constituée que de matériau organique. A cet effet, seul le plasma "HMDSO" 56 est injecté dans l'enceinte 40.

Ensuite, lors d'une cinquième étape "E5" de protection extérieure, la couche extérieure de protection 28 est formée. L'injection de plasma "HMDSO" 56 continue sans interruption après la fin de la quatrième étape "E4" anticorrosion, et du plasma d'oxygène 56 est injecté simultanément avec un ratio de débit au moins de 3 par rapport au "HMDSO" 56 de manière que la couche extérieure de protection 28 soit réalisé en matériau purement minéral (inorganique) du type silice.

En variante, comme représenté à la figure 4, lorsque la couche anticorrosion 26 et la couche extérieure de protection 28 ne sont pas délimitée de façon nette, mais par une épaisseur de transition 36, le taux de plasma d'oxygène 56 est régulée dés la fin de la quatrième étape "E4" anticorrosion de manière à augmenter au fur et à mesure de la croissance de la couche extérieure de protection 28.

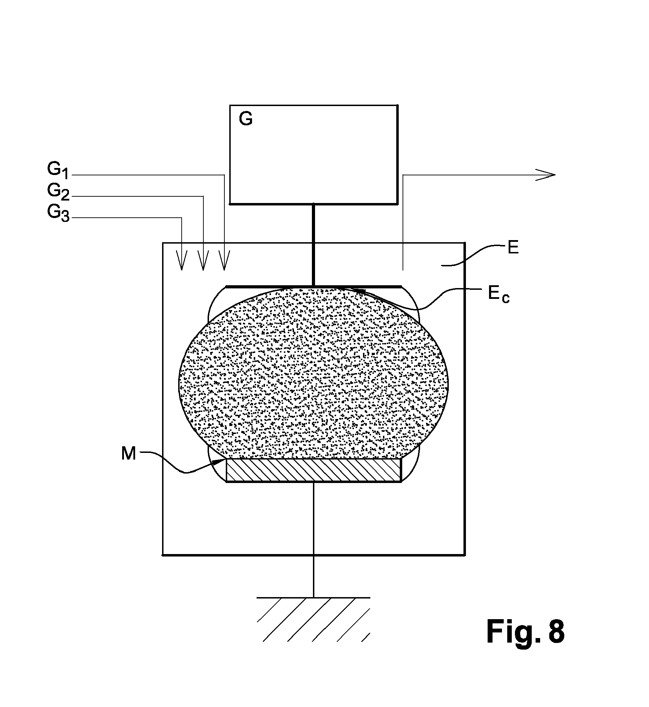

En variante également, le procédé peut être conduit selon la figure 8, avec un plasma généré dans la chambre de traitement par une ou plusieurs électrodes alimentées par un générateur à courant alternatif (moyenne fréquence ou radio fréquence) ou bien à courant continu (DC) : sont représentées l'enceinte E, le générateur G, l'entrée des gaz réactifs G1,G2,G3, la sortie des gaz vers la pompe à vide, les électrodes Ec, les éléments à traiter M. La bulle grisée représente le plasma généré dans l'enceinte.

Durant toutes ces étapes, le support du masque M est resté dans la même enceinte 40. Ainsi, le nombre d'opération pour obtenir le réflecteur 14 est avantageusement réduit.

De plus, le fait de réaliser les couches intérieure 30 et extérieure 28 de protection, la couche anticorrosion 26 et le joint de dilatation 32 à partir d'un même monomère permet avantageusement de simplifier le procédé de réalisation du réflecteur 14.

L'invention a été décrite en application à un réflecteur 14 pour un dispositif d'éclairage elliptique 10. On comprendra cependant que l'invention est applicable à des réflecteurs de tout type de dispositif d'éclairage et/ou de signalisation.

Concernant la résistance à l'abrasion de l'élément métallisé selon l'invention, de préférence, cet élément ne subit sensiblement pas de rayure après un test de 100 cycles sous 5 Newton avec un tampon coton (*cotton pad*) N°02265, ce test de résistance à l'abrasion étant un test linéaire TABER (ISO 9211-4 Class C).

La dureté de la couche de revêtement selon l'invention peut être comme suit :
- sous test de dureté crayon (*pencil hardness test*) selon la norme ISO 15 184 : la dureté (sous 2 Newton/ 45°) est supérieure à HB.

L'invention est aussi applicable à des éléments métallisés remplissant d'autres fonctions que celle de réflecteur, par exemple des éléments d'habillage remplissant une fonction esthétique, des fonctions mécaniques ou d'enjoliveur. L'invention s'applique ainsi sur des pièces présentant des surfaces aussi bien concaves (réflecteurs) que convexes (masque ...).

## Revendications

1. Elément (M) métallisé de véhicule automobile, qui comporte :
- une face de support (22) ;
- une couche métallique (24) qui recouvre au moins partiellement la face de support (22) ;
- un revêtement (28, 30) pour protéger la face de support (22) et la couche métallique (24) ;
**caractérisé en ce que** le revêtement comporte :
- une couche extérieure de protection (28) qui recouvre la couche métallique (24) et qui présente une dureté supérieure à celle de la couche métallique (24) ; et
- une couche intérieure de protection (30) qui est interposée entre la couche métallique (24) et la face de support (22) et qui présente une dureté supérieure à celle de la face de support (22).

2. Elément (14) selon la revendication précédente, **caractérisé en ce que** la couche extérieure (28) a une épaisseur d'au moins 20 nm, notamment d'au moins 25 nm, et de préférence une épaisseur d'au plus 50nm

3. Elément (14) selon l'une quelconque des revendications précédentes, **caractérisé en ce que** la couche extérieure de protection (28) présente une épaisseur d'au moins 50nm, et notamment une épaisseur comprise entre 50 ou 60 nm et 100 nm.

4. Elément (14) selon l'une quelconque des revendications précédente, **caractérisé en ce que** la dureté de la couche intérieure de protection (30) est au moins égale à celle de la couche extérieure de protection (28).

5. Elément (M) selon l'une quelconque des revendications précédentes, **caractérisé en ce que** la face de support (22) est réalisée en un matériau polymère.

6. Elément (M) selon l'une quelconque des revendications précédentes, **caractérisé en ce que** la superposition de la couche extérieure de protection (28) et de la couche intérieure de protection (30) présente une rigidité et une résistance à la rupture suffisante pour protéger la face de support (22) des rayures.

7. Elément (M) selon l'une quelconque des revendications précédentes, **caractérisé en ce que** la couche intérieure de protection (30) est plus épaisse que la couche extérieure de protection (28).

8. Elément (M) selon l'une quelconque des revendications précédentes, **caractérisé en ce que**, concernant la résistance à l'abrasion de l'élément métallisé, cet élément est agencé de manière à ce qu'il ne subit sensiblement pas de rayure après un test de 100 cycles sous 5 Newton avec un tampon coton (*cotton pad*) N°02265, ce test de résistance à l'abrasion étant un test linéaire TABER (ISO 9211-4 Class C), et/ou
la dureté de la couche de revêtement est comme suit :
- sous test de dureté crayon (*pencil hardness test*) selon la norme ISO 15 184 : la dureté (sous 2 Newton/ 45°) est supérieure à HB.

9. Elément (M) selon l'une quelconque des revendications précédentes, **caractérisé en ce qu'**une couche d'un matériau souple formant un joint de dilatation (32) est interposée entre la couche intérieure de protection (30) et la face de support (22).

10. Elément (M) selon l'une quelconque des revendications précédentes, **caractérisé en ce qu'**il comporte une couche anticorrosion (26) en un matériau transparent qui recouvre extérieurement la couche métallique (24).

11. Elément (M) selon la revendication précédente, **caractérisé en ce que** la couche anticorrosion (26) est interposée entre la couche métallique (24) et la couche extérieure de protection (28).

12. Elément (M) selon l'une quelconque des revendications précédentes, **caractérisé en ce que** les couches intérieure (30) et extérieure (28) de protection sont chacune réalisées en un matériau essentiellement minéral.

13. Elément (M) selon l'une quelconque des revendications précédentes, **caractérisé en ce que** l'élément (M) est un réflecteur, un masque, ou une platine ou socle pour un dispositif d'éclairage et/ou de signalisation (10) de véhicule automobile.

14. Procédé de réalisation de l'élément (M) selon l'une quelconque des revendications précédentes, **caractérisé en ce que** les couches intérieure (30) et extérieure (28) de protection sont réalisées par dépôt chimique en phase vapeur assisté par plasma (56) à partir de gaz précurseurs.

15. Procédé de réalisation selon la revendication précédente, **caractérisé en ce que** les gaz précurseurs comportent de l'oxygène et un monomère organosilicone ou hydrocarbure.
